# EUROPEAN PATENT SPECIFICATION

(11) **EP 2 575 025 B1**
(45) Date of publication and mention of the grant of the patent: **22.08.2018**
(21) Application number: 12178462.3
(22) Date of filing: 30.07.2012
(51) Int. Cl.: G06F 3/12

(54) **Method and system for managing print on demand jobs by maintaining customer order records with content identification of printed articles**
Verfahren und System zum Verwalten von Druck-nach-Bedarfs-Aufträgen durch Aufrechterhalten der Kundenbestellaufzeichnungen mit Inhaltsidentifizierung der gedruckten Artikel
Procédé et système de gestion de travaux d'impression à la demande par la tenue des registres de commandes client avec l'identification du contenu des articles imprimés

(30) Priority: 30.09.2011 US 201113249930
(43) Date of publication of application: 03.04.2013
(73) Proprietor: Konica Minolta Laboratory U.S.A., Inc., San Mateo CA 94403 (US)
(72) Inventor: Barber, Daniel, San Mateo, CA 94403 (US); Wu, Philip Defay, San Mateo, CA 94403 (US)
(74) Representative: Gille Hrabal

(56) References cited:
- EP-A2- 1 835 394
- US-A- 5 243 381
- US-A1- 2010 195 140

## Description

### BACKGROUND OF THE INVENTION

### Field of the Invention

This invention relates generally to method and system for printing job management and in particular, it relates to method and system for managing print on-demand (POD) printing jobs by maintaining customer order records with content identification of printed articles.

### Description of Related Art

Many POD jobs nowadays are submitted to and handled by network or web-based ordering and/or purchasing systems. For example, a customer may place a POD job order online to a web-store server to print a booklet that is a compilation of several articles. Some or all of the articles may be submitted or supplied by the customer. Alternatively, the web-store server may gather some or all of the articles from its own database and/or from one or more third parties' content sources. These articles gathered, either from the customer's submission or from the web-store's or third parties' database or content sources, are combined together and processed by the web-store server to create a single document. The format may be PDF, HTML, TXT, XPS, ePub, *etc.* A job definition format (JDF) file containing detailed requirements of the customer's order is also created by the web-store server. Then the unified document and JDF files are sent by the web-store server to a remote print server via a network such as the Internet for printing the booklet for the customer.

Under certain circumstances a customer may need to order, at a later time, another booklet that may contain some articles that were included in a booklet previously ordered by the customer. For example, a customer C1 has previously ordered a booklet B that contains articles A1, A2 and A3. Later the customer C1 wants to order a booklet B1 that contains articles A3, A4 and A5. However, since customers C1 already has the booklet B that contains article A3, customer C1 will want to remove article A3 from booklet B1, and order a modified booklet B1' that contains only articles A4 and A5.

A similar situation may occur when an author, editor or compiler has created a booklet that contains in its most complete and standard version all articles to be included in the booklet, but when a customer orders the booklet, the customer wants to modify the booklet to remove one or more of the articles because the customer already has these articles. For example, an author A has created a booklet B that in its standard or complete version contains articles A1, A2 and A3. However a customer C2 already has article A1 and only wants to order a booklet that contains articles A2 and A3. So the customer C2 will remove article A1 from booklet B, and order a modified booklet B2 that contains only articles A2 and A3.

The advanced POD technology has made it possible for such customized printing. For example, when a web-store server receives an order from customer C to print booklet B, the web-server can process articles A1, A2 and A3 and create a unified file P that contains all of these articles A1, A2 and A3, and sends the unified file P1 with a corresponding JDF file J to a print server to print booklet B for customer C. However, if the web-store server receives an order from customer C1 to print booklet B1', the web-server will process articles A4 and A5 and create a unified file P1 that contains articles A4 and A5, and sends the unified file P1 with a corresponding JDF file J1 to the print server to print booklet B1' for customer C1.

Likewise, if the web-store server receives an order from customer C2 to print booklet B2, the web-server will process articles A2 and A3 and create a PDF file P2 that contains articles A2 and A3, and sends the unified file P2 with a corresponding JDF file J2 to a print server to print booklet B2 for customer C2.

However, often time the articles have gone under revisions or different editions so that they are not exactly the same, but a customer may not realize this because, for example, the name of the article remains unchanged. For example, an article A3 may have been revised or edited between the creation or compilation of booklets B and B1, so the new version A3n is not identical to the old version A3, yet the most "obvious identifiers" of the article, such as its title and author, remain the same. When customer C1 who already has booklet B that contains articles A1, A2 and A3 reviews booklet B1n that contains articles A3n, A4 and A5, customer C1 may be let to believe that article A3n is the same as article A3 because they have the same obvious identifiers such as the title and author, and decide to remove article A3n and order the modified booklet B1' that contains only articles A4 and A5, without realizing that articles A3n contained in booklet B1n is different from the article A3 which customer C1 already has in booklet B.

If customer C1 knows that article A3n is in fact different from article A3, then customer C1 will order booklet B1. On the other hand, if customer C2 can be sure that article A1 contained in booklet B is the same as the article A1 that customer C2 already has, then customer C2 may order with confidence the modified booklet B2 that contains only articles A2 and A3. Without this certainty and with the fear that an article in a later booklet may not be the same as the article in an earlier booklet, a customer may want to be error on the cautious side and order the entire new booklet without modification.

However, if a customer is certain that an article in a later booklet is exactly the same as the article in an earlier booklet, then the customer may want to order a modified booklet without the duplicative article. This will reduce the number of articles to be processed for creating the unified file for the POD job, making the processing of the articles by the web-store server much faster. This will also reduce the burden on the network since the size of the unified file is smaller, which can be transmitted over the network much faster.

There is a need to accurately identify an article so that a customer can tell whether the contents of a later version of the article is exactly the same as, or different from, the contents of an earlier version of the article, so that the customer can correctly decide whether to modify a new booklet to remove the same article.

US 5,243,381 discloses a method for printing a job, represented by a set of electronic pages, with a job reference sheet in a printing system. The method includes the steps of storing the set of electronic pages in a memory section and assigning a unique job identifier to the stored job for indicating a location of the stored job in the memory section.

US 2010/0195140 A1 teaches to create a synopsis for a new incoming print job for a comparison with historical print job synopses database in order to augment an initial workflow for the incoming print job.

EP 1835394 A2 discloses a print management system, which is used for managing printing of document data using a printing means adapted to form a print image on a printing medium, comprising: a schedule storage means for, on a per-event basis, storing schedule information containing the time and date of an event and identification information for the attendees of the event, a print status storage means for, on a per-event and per-attendee basis, storing print status information describing the print status of the document data, an input means for inputting user identification information, and a control means for, based on the schedule information and the print status information, identifying document data to be printed depending on the user and controlling display of a screen prompting to print the identified document data.

### SUMMARY

The present invention is directed to a method and system for managing POD print jobs by maintaining customer record with content identification of printed articles.

An object of the present invention is to provide a detailed order record, or purchase history, of a customer that contains content identification of all articles that have been ordered or purchased by the customer, so that when the customer orders a new booklet, the customer can determine whether the content of an article in the new booklet is the same as the content of the same article that the customer has already ordered or purchased previously.

To achieve these and/or other objects, as embodied and broadly described, the present invention provides a method and system for managing print job through a process that includes the features of claim 1 respectively the features of claim 8 as well as a computer program which comprises the features of claim 15. The method and the system comprises the steps of receiving a print job order for printing a multiplicity of articles, processing the multiplicity of articles to create an identification (ID) for each article, and determining whether an article ID stored in a database matches any of the new IDs of the multiplicity articles. If a matching article ID does not exist, then keeping the article and storing the ID of the kept article in the database. If a matching article ID exists, then removing the article from the print job, and repeating the above steps until all of the multiplicity of articles are processed accordingly. When printing the job, only the remaining articles are printed.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

Fig. 1 is a schematic block diagram illustrating an online print shop arrangement for customers to order POD jobs from a web-store server, in accordance with one of the exemplary embodiments of the present invention.
Fig. 2 is a schematic block diagram illustrating a customer computer system for placing POD orders with the web-store server according to one of the exemplary embodiments of the present invention.
Fig. 3 is a schematic block diagram illustrating a web-store server for processing POD orders according to one of the exemplary embodiments of the present invention.
Fig. 4 is a schematic block diagram illustrating a print shop arrangement having a print server connected to printers for printing POD orders, in accordance with one of the exemplary embodiments of the present invention.
Fig. 5 is a flow chart showing a process implementing a method for managing POD jobs to be processed by a web-server and printed by a print server, in accordance with one of the exemplary embodiments of the present invention.

### DETAILED DESCRIPTION OF PREFERRED EMBODIMENTS

Embodiments of the present invention provide a method and system for promoting and marketing environmental friendly print shops. The present invention method may be implemented by a computer software program that has program codes and instructions for implementing the steps of the present invention.

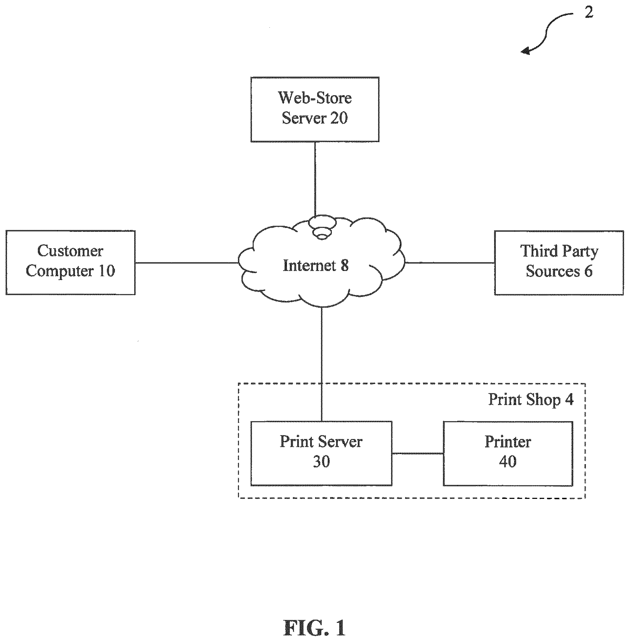

Referring to Figure 1, there is shown at 2 a schematic block diagram illustrating an online arrangement for handling POD jobs in accordance with one of the exemplary embodiments of the present invention. The online arrangement 10 generally includes customer computers 10 (only one is shown for clarity), one or more web-store servers 20 (only one is shown for clarity), one or more print servers 30 (only one is shown for clarity) which shall be part of a print shop 4 and connected to one or more print shop printers 40 (only one is shown for clarity), and one or more third party content sources 6 (only one is shown for clarity), all connected wired or wirelessly to an open network such as the Internet 8.

In this application the term "web-store" generally refers to an online platform where customers (including for example, authors, editors, compilers, purchasers, *etc*.) may access via the Internet 8. The online platform typically provides web-pages upon which customers may utilize to place or make online orders. The web-pages are generated typically by computer software programs installed on and executed by one or more web-store servers 20. The computer programs installed and executed on the web-store server 20 also cause the print server 30 to process the online orders submitted by the customers.

In this application the term "print shop" generally refers to an environment of professional print shops, publishing workshops, print/copy departments of large organizations or business entities, and press unit of educational institutions such as colleges and universities, where a variety of POD orders can be processed by one or more print servers and printed by utilizing one or more printers.

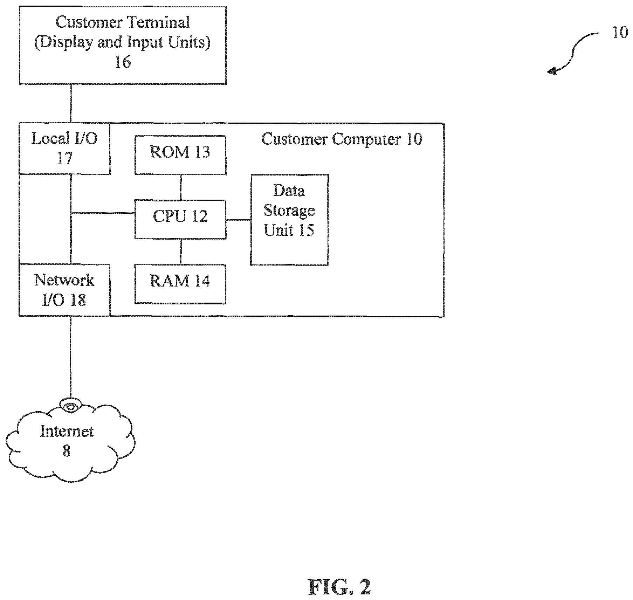

Referring to Figure 2, there is shown a schematic block diagram illustrating an exemplary customer computer system 10, whereupon various embodiments of the present invention may be implemented. The customer computer 10 generally includes a central processor unit (CPU) 12 that controls the function and operation of the computer 10 and execute computer instructions and programs that may be installed or saved on a read only memory (ROM) 13, a random access memory (RAM) 14, or a data storage unit 15 (such as a hard disc drive or a flash memory) coupled to the CPU 12. One or more user terminals 16 (each may have its display and input units) may be connected to the computer 10 to enable a customer and/or user to interact with the computer 10. Alternatively the computer 10 may have its own integrated display and input units to enable a customer or user to interact with the computer 10. The computer 10 typically also has a local input/output (I/O) port 17 for connection with the user terminal 16, and a network I/O port 18 for connection to a network such as the Internet 8 so the computer 10 may remotely communicate with the web-store server 20 and print shop servers 30. It is understood that customer computer 10 may be any suitable computer, such as a desktop computer, a laptop computer, a server, a netbook computer, a tablet computer, or any suitable data processing apparatus including but not limited to smart-phones and other handheld devices that have suitable data processing capabilities.

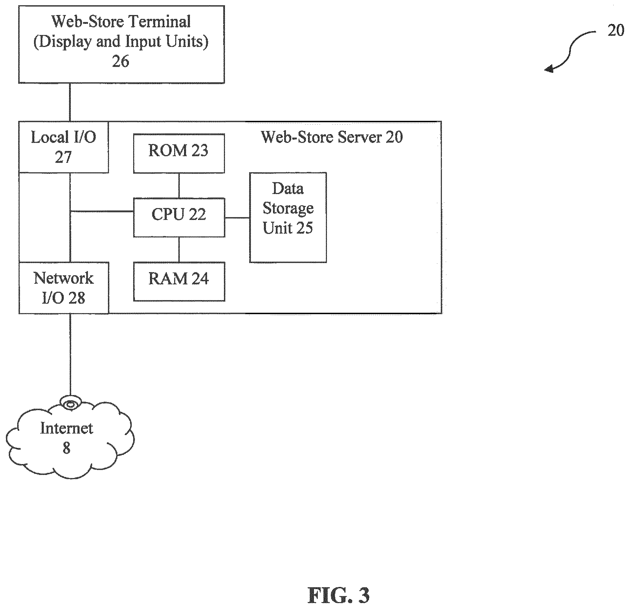

Referring to Fig. 3, there is shown a schematic block diagram illustrating an exemplary web-store server 20, whereupon various embodiments of the present invention may be implemented. The web-store server 20 generally includes a central processor unit (CPU) 22 that controls the function and operation of the server 20 and execute computer instructions and programs that may be installed or saved on a read only memory (ROM) 23, a random access memory (RAM) 24, or a data storage unit 25 (such as a hard disc drive or a flash memory) coupled to the CPU 22. One or more user terminals 26 (each may have its display and input units) may be connected to the server 20 to enable an operator and/or user to interact with the server 20. Alternatively the server 20 may have its own integrated display and input units to enable an operator or user to interact with the server 20. The server 20 typically also has a local input/output (I/O) port 27 for connection with the user terminal 26, and a network I/O port 28 for connection to a network such as the Internet 8 so the server 20 may remotely communicate with the customer computer 10 and print shop servers 30. It is understood that web-store server 20 may be any suitable computer or computer system or other electronic devices that have suitable data processing capabilities.

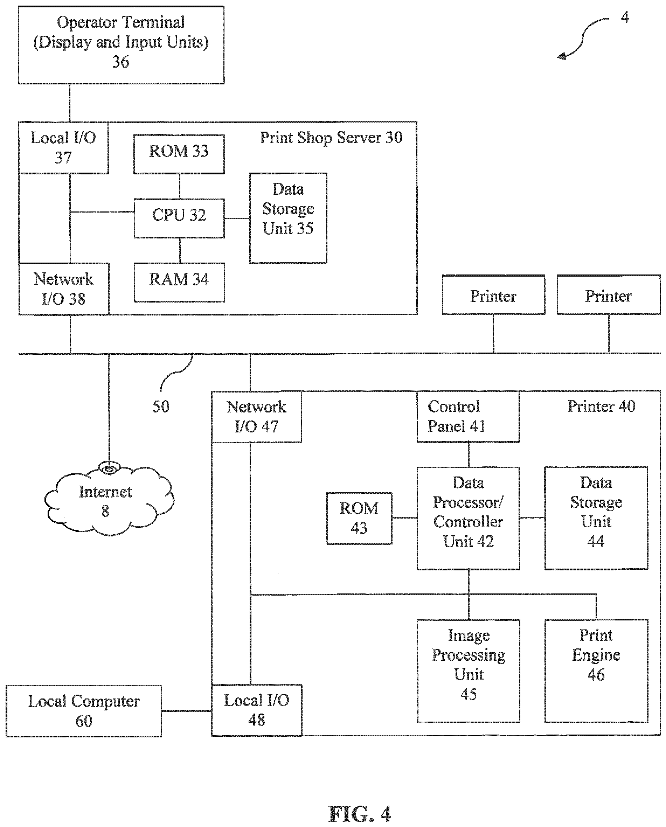

Referring to Figure 4, there is shown a schematic block diagram illustrating an exemplary print shop arrangement 4 having a print server 30 connected to printers 40 for implementing the embodiments of the present invention.

In the exemplary print shop printing system set up or arrangement 4, a multiplicity of color and/or black and white printers are connected to and controlled by the printer shop server 30 through a data communication channel or equipment 50 which may be a wired or wireless network, a serial bus or a dedicated cable. One or more of the printers, such as printer 40, may also be directly connected to and controlled by a local computer 60. Other devices (not shown) may also be connected to the server 30, the local computer 60 or network channel 50, such as scanners, finishing devices, *etc.,* as part of the printing system set up or arrangement 4. The print shop system 4 may also include a number of "off-line" (or "off-network") devices (not shown) that are not connected to the network channel 50, which devices may be any type of devices used in the print shop, such as finishing devices, prepress devices, *etc.*

In this application the term "printer" may refer to small desk-top printers typically seen in an office environment, or large digital printing systems used in print/copy departments at large organizations or professional print shops. The term may also cover other similar image and document processing devices such as copiers or multifunction ("all-in-one") printers that also have copier, scanner and/or facsimile functions. The printer may be directly attached to a computer or server locally, or connected to a computer or server through a network remotely, where the computer or server are used to manage a print job to be processed by the printer. The printer may have multiple paper trays to store paper of various sizes, color, and types. Further, the printer may be equipped with a sophisticated output sorting mechanism with multiple output trays to perform collate printing or other print finishing functions.

As shown in Figure 4, the print shop server 30 generally includes a central processor unit (CPU) 32 that controls the function and operation of the server 30 and execute computer instructions and software programs that may be installed or saved on a read only memory (ROM) 33, a random access memory (RAM) 34, or a data storage unit 35 (such as a hard disc drive) coupled to the CPU 32. One or more print shop operator terminals 36 (each may have its display and input units) may be connected to the server 30 to enable print shop operators and/or users to interact with the server 30 and/or the rest of the print shop system 4. Alternatively the server 30 may have its own integrated display and input units to enable print shop operators and/or users to interact with the server 30 and/or the rest of the print shop system 4. The server 30 typically has a local input/output (I/O) port 37 for connection with the user terminal 36, and a network I/O port 38 for connection to the data communication channel 50. Through the network channel 50 the server 30 is also connected to the external computer network such as the Internet 8 so the server 30 can remotely communicate with the customer computer 10 and web-store server 20.

As also shown in Figure 4, the printer 40 typically has a control panel 41, a controller or control unit 42 which controls the other internal units of printer 40 and is connected to the control panel 41, read-only memory (ROM) 43 and a data storage unit 44. The control panel 41 is accessible by a user and may include a display screen such as a liquid crystal display (LCD) display screen and user input means such as keys, buttons, touch screen, *etc*., for a user to communicate with and control the function and operation of printer 40. The printer 40 also has an image processing unit 45 and a print engine 46. The printer 40 typically has a network input/output (I/O) port 47 for connection with the print shop server 30 via data communication channel 50, and a local I/O port 48 for optionally connecting to the local computer 60.

It is understood that while Figure 4 shows a print shop environment, the present invention is not limited to any physical setting of a print shop or network, and can be applied to a printing system having a distributed setting where printers at different locations are connected to one print shop server. In particular, it should be apparent that one or more of the components of the printing system can communicate with the rest of the system via virtual private network (VPN) or similar means through the Internet 8.

The computer software program that implements the present invention method and process may be installed on the web-store server 20, and its application modules or client-end component parts may be installed on the customer computers 10 and/or printer shop servers 30 (or on the printer 40 or local computer 60). When a web-store operator executes the exemplary software program of the present invention, the web-store server 20 carries out various respective functions of the software to perform the web-store server part of the exemplary process of the present invention. In addition, when a customer executes an application module of the exemplified software program of the present invention from the customer's end, the customer computer 10 carries out various respective functions of the software to perform the customer part of the exemplary process of the present invention. Furthermore, when a print shop operator executes an application module of the exemplified software program of the present invention from the print shop's end, the printer shop server 30 carries out various respective functions of the software to perform the print shop part of the exemplary process of the present invention. Together the execution of the various application modules of the exemplary software program of the present invention by the web-store server 20, customer computers 10 and/or printer shop servers 30 cause the performance and completion of the exemplary method and process of the present invention described below.

As discussed earlier, often times a customer may have previously ordered a booklet that contains certain articles. At a later time, the customer may need to order another booklet that may contain some articles that were included in the earlier booklet. Alternatively, an author or editor may have created a booklet that contains certain articles. The customer may want to order the booklet but the customer may already have some of the articles in the booklet. In these situations, the customer may modify the booklet to remove the articles that the customer already have or does not need. However, before the customer removes the articles from the booklet, the customer needs to make sure that the content of an article to be removed is exactly the same as the content of the article that the customer already has. Otherwise the customer may not want to remove the article from the booklet. For this purpose, in most of the time the normal identifiers of an article, such as its title and author, may not be adequate as they often remain the same from an earlier version to a later version.

The present invention provides a method and system for accurately identifying an article so that a customer can tell whether the contents of a later version of the article is exactly the same as the contents of an earlier version of the article, so that the customer can decide correctly whether to modify a new booklet to remove the duplicative articles.

According to the exemplary embodiments of the present invention, a detailed order record of a customer's purchase history is created and maintained, which contains content identification of all articles that have been ordered or purchased by the customer, so that when the customer orders a new booklet, the customer can determine with certainty whether the content of an article in the new booklet is the same as the content of the same article that the customer may have already ordered or purchased previously.

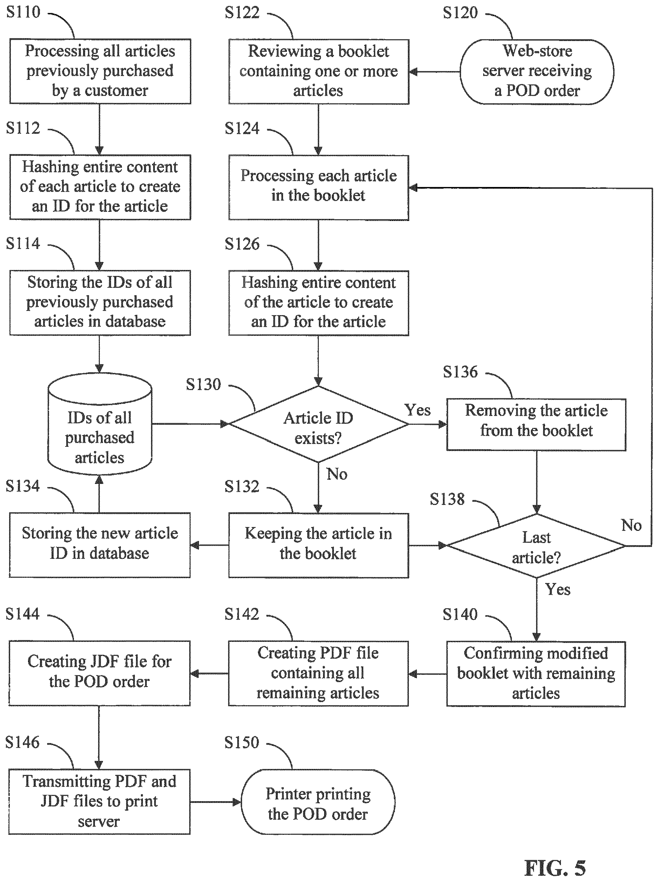

Referring to Figure 5, there is illustrated an exemplary method and process of the present invention. At a preparation step S110, all articles previously purchased by a customer are processed. This includes a step S112 wherein the entire content of each article is hashed by a cryptographic hash function, for example the MD5 or SHA-2 function, to create an identification (ID) which is unique hash value as a digital fingerprint of the article. Step S112 is repeated until the respective IDs of all articles are created. At step S114 the IDs of all articles previously purchased by the customer are stored in a data storage such as the data storage unit 25 of the web-store server 20. This process is repeated for all customers that have previously purchased articles from the web-store, such that all customers who have purchased booklets/articles from the web-store will have their respective order record or purchased history established and maintained at the web-store server 20. Such records or history are detailed with content identification, *i,e*,, the ID of each article is generated from the entire content of the article and therefore can identify and distinguish the article according to its content, not merely its title, author, *etc.* This ensures that when the content of a later or newer version of the article is different from the content of an earlier or older version of the article, even if both versions of the article have the same title and author, their respective IDs will be different.

When a customer's new POD order for printing a booklet is received by the web-store server 20 at step S120, the articles in the booklet are reviewed at step S122. This booklet may be created by another customer or author or editor containing all articles authored or compiled by the author or editor, or a collection of articles that the customer wants to print in a booklet. In either scenario the booklet will start out with one or more articles that may be kept or removed depending on whether the customer has previously purchased any of the articles.

As step S124, each article in the booklet is processed. This process includes a step S126 wherein the entire content of each article is hashed by, for example, the MD5 hash function, to create an ID for the article. This article ID is compared with the article IDs stored in the database saved on, for example, the data storage unit 25 of the web-store server 20. If the article ID exists, it means that the customer has previously purchase the same article. It is noted since the entire content of an article is hashed, any revision of an existing version of an article will result in an ID that is different from the ID of the article having an earlier version. Unlike a mere comparison of obvious identifiers, for example, the file name or author name of the article, the present invention process compares the article IDs which are generated by hashing the entire content of the article. If an article is revised, then the ID of the newer version will be different from the ID of an earlier version. On the other hand, if a matching article ID does not exist, then it means the article is a new one or at least a newer version.

So at step S130 the ID of an article contained in the booklet is compared with the article IDs stored in the database. If an article ID does not exist, then it means that the customer has never purchased the article in the past, and the article will be kept at step S132, and the new article ID will be stored in the database at step S134. However, if an article ID does exist, then it means that the customer has previously purchased an identical article (e.g., same version of a same article), and the article will be removed from the sequence of the booklet at step S136. At step S138, if the article compared is not the last article in the booklet, then the steps of S124 through S138 will be repeated until the last article in the booklet is processed.

After all articles are compared, the sequence of the remaining articles in the modified booklet will be confirmed at step S140 by, for example, the customer. Once confirmed, at step S142 the web-store server 20 will proceed to create a single unified file containing all of the remaining articles, and at step S144 a JDF file is also created containing all specific printing requirements by the customer. At step S146 the unified file and JDF are forwarded by the web-store server 20 to a remote (or local) print server 30, which will send the unified file and JDF files to a printer 40 to print the POD order at the last step S150.

It is noted that other document or print job description formats may also be used, for example the open XML Paper Specification (XPS or OpenXPS) format, for processing and transmitting the articles to be printed.

The above described exemplary method and process according to the present invention has many advantages. It provides an accurate way to identify an article, so that a customer can confidently decide not to order an article from a booklet order for which the customer already has a copy, without worrying that the content of the removed article may not be identical to the copy of the article that the customer already possesses. It also offers potential savings in computer processing overhead. If the customers are able to verify that they have already purchased certain articles, the articles in question may be removed and will not need to be processed by the web-store server and transmitted over the network. It further offers potential savings in printing costs and materials, since not all articles in a particular booklet must be printed. Therefore overall printing costs will be reduced.

## Claims

1. A method for managing print jobs, comprising the steps of:
a. receiving a print job order for printing a multiplicity of articles;
b. processing the multiplicity of articles and creating an identification (ID) for each article that is generated from an entire content of the article and therefore can identify and distinguish the article according to its content;
c. determining whether an article ID stored in a database matches any of the new IDs of the multiplicity articles (S130);
c. if a matching article ID does not exist, then
c1. keeping the article (S132);
c2. storing the ID of the kept article in the database (S134);
d. if a matching article ID exists, then
d1. removing the article from the print job (S136);
d2. repeating steps (b) through (d1) until all of the multiplicity of articles are processed accordingly; and
e. printing the job with only the remaining articles.

2. The method according to claim 1, further comprising the steps of:
f1. processing all articles previously purchased by a customer (S110) to create an ID for each of the articles;
f2. storing the IDs in a database (S114) as part of the customer's purchase history; and
f3. repeating steps (f1) through (f2) until all customer's prior purchases are processed.

3. The method according to claim 2, wherein in step (f1) the article ID is created by a hashing function.

4. The method according to claim 3, wherein the entire content of each article is hashed when creating its ID (S112).

5. The method according to any one of claims 1 to 4, wherein in step (b) the article ID is created by a hashing function.

6. The method according to claim 5, wherein the entire content of each article is hashed when creating its ID (S112).

7. The method according to any one of claims 1 to 6, further comprising the steps of:
g1. creating a unified file containing only the remaining articles by a web-store server (20); and
g2. transmitting the unified file to a remote print server (30) via a network.

8. A system for managing print jobs comprising at least one data processing apparatus having a non-transitory memory storing a computer software program and a processor executing the computer software program, wherein the computer software program includes program code, wherein the program code and the at least one data processing apparatus are configured in such a way that the program code causes the at least one data processing apparatus to
a. receiving a print job order for printing a multiplicity of articles;
b. processing the multiplicity of articles and creating an identification (ID) for each article that is generated from an entire content of the article and therefore can identify and distinguish the article according to its content;
c. determining whether an article ID stored in a database matches any of the new IDs of the multiplicity articles (S130);
c. if a matching article ID does not exist, then
c1. keeping the article (S132);
c2. storing the ID of the kept article in the database (S134);
d. if a matching article ID exists, then
d1. removing the article from the print job (S136);
d2. repeating steps (b) through (d1) until all of the multiplicity of articles are processed accordingly; and
e. printing the job with only the remaining articles.

9. The system according to claim 8, wherein the program code and the at least one data processing apparatus are configured in such a way that the program code further causes
f1. processing all articles previously purchased by a customer (S110) to create an ID for each of the articles;
f2. storing the IDs in a database (S114) as part of the customer's purchase history; and
f3. repeating steps (f1) through (f2) until all customer's prior purchases are processed.

10. The system according to claim 9, wherein in step (f1) the article ID is created by a hashing function.

11. The system according to claim 10, wherein the entire content of each article is hashed when creating its ID (S112).

12. The system according to any one of claims 8 to 11, wherein in step (b) the article ID is created by a hashing function.

13. The system according to claim 12, wherein the entire content of each article is hashed when creating its ID (S112).

14. The system according to any one of claims 8 to 13, wherein the program code and the at least one data processing apparatus are configured in such a way that the program code further causes
g1. creating a unified file containing only the remaining articles by a web-store server (20); and
g2. transmitting the unified file to a remote print server (30) via a network.

15. A computer program for controlling at least one data processing apparatus, the computer program configured to cause the at least one data processing apparatus to execute a process for managing print jobs, comprising the steps of:
a. receiving a print job order for printing a multiplicity of articles;
b. processing the multiplicity of articles and creating an identification (ID) for each article that is generated from an entire content of the article and therefore can identify and distinguish the article according to its content;
c. determining whether an article ID stored in a database matches any of the new IDs of the multiplicity articles (S130);
c. if a matching article ID does not exist, then
c1. keeping the article (S132);
c2. storing the ID of the kept article in the database (S134);
d. if a matching article ID exists, then
d1. removing the article from the print job (S136);
d2. repeating steps (b) through (d1) until all of the multiplicity of articles are processed accordingly; and
e. printing the job with only the remaining articles.

16. The computer program according to claim 15, wherein the process further comprises the steps of:
f1. processing all articles previously purchased by a customer to create an ID for each of the articles;
f2. storing the IDs in a database (S114) as part of the customer's purchase history; and
f3. repeating steps (f1) through (f2) until all customer's prior purchases are processed.

17. The computer program according to claim 16, wherein in step (f1) the article ID is created by a hashing function.

18. The computer program according to claim 17, wherein the entire content of each article is hashed when creating its ID (S112).

19. The computer program according to any one of claims 15 to 18, wherein in step (b) the article ID is created by a hashing function.

20. The computer program according to claim 19, wherein the entire content of each article is hashed when creating its ID (S112).

21. The computer program according to any one of claims 15 to 20, wherein the process further comprises the steps of:
g1. creating a unified file containing only the remaining articles by a web-store server (20); and
g2. transmitting the unified file to a remote print server (30) via a network.

## Patentansprüche

1. Verfahren zur Verwaltung von Druckaufträgen, umfassend die Schritte:
a. Erhalten eines Druckauftrags zum Drucken einer Vielzahl von Artikeln;
b. Verarbeiten der Vielzahl von Artikeln und Erzeugen einer Identifikation (ID) für jeden Artikel, die aus einem gesamten Inhalt des Artikels generiert wurde und somit den Artikel nach seinem Inhalt identifizieren und unterscheiden kann;
c. Bestimmen, ob eine in einer Datenbank gespeicherte Artikel-ID mit einer der neuen IDs der Vielzahl von Artikeln übereinstimmt (S130);
c. wenn keine übereinstimmende Artikel-ID vorhanden ist, dann
c1. Behalten des Artikels (S132);
c2. Speichern der ID des behaltenen Artikels in der Datenbank (S134);
d. wenn eine übereinstimmende Artikel-ID vorhanden ist, dann
d1. Entfernen des Artikels aus dem Druckauftrag (S136);
d2. Wiederholen der Schritte (b) bis (d1), bis alle der Vielzahl der Artikel entsprechend verarbeitet sind; und
e. Drucken des Auftrags mit nur den restlichen Artikeln.

2. Verfahren nach Anspruch 1, ferner umfassend die Schritte:
f1. Bearbeiten aller zuvor von einem Kunden erworbener Artikel (S110), um für jeden der Artikel eine ID zu erzeugen;
f2. Speichern der IDs in einer Datenbank (S114) als Teil der Kaufhistorie des Kunden;und
f3. Wiederholen der Schritte (f1) bis (f2), bis alle vorhergehenden Erwerbungen des Kunden bearbeitet sind.

3. Verfahren nach Anspruch 2, wobei in Schritt (f1) die Artikel-ID durch eine Hash-Funktion erzeugt wird.

4. Verfahren nach Anspruch 3, bei dem der gesamte Inhalt jedes Artikels bei der Erzeugung seiner ID einem Hash-Vorgang unterliegt (S112).

5. Verfahren nach einem der Ansprüche 1 bis 4, wobei in Schritt (b) die Artikel-ID durch eine Hash-Funktion erzeugt wird.

6. Verfahren nach Anspruch 5, bei dem der gesamte Inhalt jedes Artikels bei der Erzeugung seiner ID einem Hash-Vorgang unterliegt (S112).

7. Verfahren nach einem der Ansprüche 1 bis 6, das ferner die folgenden Schritte umfasst:
g1. Erzeugen einer vereinigten Datei, die nur die restlichen Artikel enthält, durch einen Web-Store-Server (20); und
g2. Übertragen der vereinigten Datei an einen Remote-Druckserver (30) über ein Netzwerk.

8. System zur Verwaltung von Druckaufträgen, umfassend mindestens eine Datenverarbeitungsvorrichtung mit einem nicht-transitorischen Speicher, der ein Computersoftwareprogramm speichert, und einen Prozessor, der das Computersoftwareprogramm ausführt, wobei das Computersoftwareprogramm Programmcode enthält, wobei der Programmcode und die mindestens eine Datenverarbeitungsvorrichtung so konfiguriert sind, dass der Programmcode die mindestens eine Datenverarbeitungsvorrichtung veranlasst
a. Erhalten eines Druckauftrags zum Drucken einer Vielzahl von Artikeln;
b. Verarbeiten der Vielzahl von Artikeln und Erzeugen einer Identifikation (ID) für jeden Artikel, die aus einem gesamten Inhalt des Artikels generiert wurde und somit den Artikel nach seinem Inhalt identifizieren und unterscheiden kann;
c. Bestimmen, ob eine in einer Datenbank gespeicherte Artikel-ID mit einer der neuen IDs der Vielzahl von Artikeln übereinstimmt (S130);
c. wenn keine übereinstimmende Artikel-ID vorhanden ist, dann
c1. Behalten des Artikels (S132);
c2. Speichern der ID des behaltenen Artikels in der Datenbank (S134);
d. wenn eine übereinstimmende Artikel-ID vorhanden ist, dann
d1. Entfernen des Artikels aus dem Druckauftrag (S136);
d2. Wiederholen der Schritte (b) bis (d1), bis alle der Vielzahl der Artikel entsprechend verarbeitet sind; und
e. Drucken des Auftrags mit nur den restlichen Artikeln.

9. System nach Anspruch 8, wobei der Programmcode und die mindestens eine Datenverarbeitungsvorrichtung so konfiguriert sind, dass der Programmcode weiter bewirkt
f1. Bearbeiten aller zuvor von einem Kunden erworbener Artikel (S110), um für jeden der Artikel eine ID zu erzeugen;
f2. Speichern der IDs in einer Datenbank (S114) als Teil der Kaufhistorie des Kunden;und
f3. Wiederholen der Schritte (f1) bis (f2), bis alle vorhergehenden Erwerbungen des Kunden bearbeitet sind.

10. System nach Anspruch 9, wobei im Schritt (f1) die Artikel-ID durch eine Hash-Funktion erzeugt wird.

11. System nach Anspruch 10, wobei der gesamte Inhalt jedes Artikels bei der Erzeugung seiner ID einem Hash-Vorgang unterliegt (S112).

12. System nach einem der Ansprüche 8 bis 11, wobei in Schritt (b) die Artikel-ID durch eine Hash-Funktion erzeugt wird.

13. System nach Anspruch 12, wobei der gesamte Inhalt jedes Artikels bei der Erzeugung seiner ID einem Hash-Vorgang unterliegt (S112).

14. System nach einem der Ansprüche 8 bis 13, wobei der Programmcode und die mindestens eine Datenverarbeitungsvorrichtung so konfiguriert sind, dass der Programmcode weiter bewirkt
g1. Erzeugen einer vereinigten Datei, die nur die restlichen Artikel enthält, durch einen Web-Store-Server (20); und
g2. Übertragen der vereinigten Datei an einen Remote-Druckserver (30) über ein Netzwerk.

15. Computerprogramm zum Steuern mindestens einer Datenverarbeitungsvorrichtung, wobei das Computerprogramm so konfiguriert ist, dass es die mindestens eine Datenverarbeitungsvorrichtung veranlasst, einen Prozess zum Verwalten von Druckaufträgen auszuführen, umfassend die Schritte:
a. Erhalten eines Druckauftrags zum Drucken einer Vielzahl von Artikeln;
b. Verarbeiten der Vielzahl von Artikeln und Erzeugen einer Identifikation (ID) für jeden Artikel, die aus einem gesamten Inhalt des Artikels generiert wurde und somit den Artikel nach seinem Inhalt identifizieren und unterscheiden kann;
c. Bestimmen, ob eine in einer Datenbank gespeicherte Artikel-ID mit einer der neuen IDs der Vielzahl von Artikeln übereinstimmt (S130);
c. wenn keine übereinstimmende Artikel-ID vorhanden ist, dann
c1. Behalten des Artikels (S132);
c2. Speichern der ID des behaltenen Artikels in der Datenbank (S134);
d. wenn eine übereinstimmende Artikel-ID vorhanden ist, dann
d1. Entfernen des Artikels aus dem Druckauftrag (S136);
d2. Wiederholen der Schritte (b) bis (d1), bis alle der Vielzahl der Artikel entsprechend verarbeitet sind; und
e. Drucken des Auftrags mit nur den restlichen Artikeln.

16. Computerprogramm nach Anspruch 15, wobei der Prozess ferner die Schritte umfasst:
f1. Bearbeiten aller zuvor von einem Kunden erworbener Artikel (S110), um für jeden der Artikel eine ID zu erzeugen;
f2. Speichern der IDs in einer Datenbank (S114) als Teil der Kaufhistorie des Kunden;und
f3. Wiederholen der Schritte (f1) bis (f2), bis alle vorhergehenden Erwerbungen des Kunden bearbeitet sind.

17. Computerprogramm nach Anspruch 16, wobei in Schritt (f1) die Artikel-ID durch eine Hash-Funktion erzeugt wird.

18. Computerprogramm nach Anspruch 17, wobei der gesamte Inhalt jedes Artikels bei der Erzeugung seiner ID einem Hash-Vorgang unterliegt (S112).

19. Computerprogramm nach einem der Ansprüche 15 bis 18, wobei in Schritt (b) die Artikel-ID durch eine Hash-Funktion erzeugt wird.

20. Computerprogramm nach Anspruch 19, wobei der gesamte Inhalt jedes Artikels bei der Erzeugung seiner ID einem Hash-Vorgang unterliegt (S112).

21. Computerprogramm nach einem der Ansprüche 15 bis 20, wobei der Prozess ferner die Schritte umfasst:
g1. Erzeugen einer vereinigten Datei, die nur die restlichen Artikel enthält, durch einen Web-Store-Server (20); und
g2. Übertragen der vereinigten Datei an einen Remote-Druckserver (30) über ein Netzwerk.

## Revendications

1. Procédé de gestion de travaux d'impression, comprenant les étapes de :
a recevoir une commande de travail d'impression pour imprimer une multitude d'articles ;
b traiter la multitude d'articles et créer une identification (ID) pour chaque article, laquelle est générée à partir du contenu entier de l'article et peut ainsi identifier et distinguer l'article selon son contenu ;
c déterminer si une identification d'article stockée dans une base de données correspond à quelqu'une des nouvelles identifications de la multitude d'articles (S130) ;
c si une identification d'article correspondante n'existe pas,
c1. garder l'article (S132) ;
c2. stocker l'identification de l'article gardé dans la base de données (S134) ;
d si une identification d'article correspondante existe,
d1. retirer l'article du travail d'impression (S136) ;
d2. répéter les étapes (b) à (d1) jusqu'à ce que tous de la multitude d'articles soient traités conformément ; et
e imprimer le travail avec seulement les articles restants.

2. Procédé selon la revendication 1, en outre comprenant les étapes de :
f1. traiter tous les articles achetés précédemment par un client (S110) pour créer une identification pour chacun des articles ;
f2. stocker les identifications dans une base de données (S114) comme une partie de l'histoire d'achat du client ; et
f3. répéter les étapes (f1) à (f2) jusqu'à ce que tous les achats préalables du client soient traités.

3. Procédé selon la revendication 2, dans lequel dans l'étape (f1) l'identification d'article est créée à l'aide d'une fonction de hachage.

4. Procédé selon la revendication 3, dans lequel le contenu entier de chaque article est haché, quand l'identification de celui-ci est créée (S112).

5. Procédé selon l'une quelconque des revendications 1 à 4, dans lequel dans l'étape (b) l'identification d'article est créée à l'aide d'une fonction de hachage.

6. Procédé selon la revendication 5, dans lequel le contenu entier de chaque article est haché, quand l'identification de celui-ci est créée (S112).

7. Procédé selon l'une quelconque des revendications 1 à 6, comprenant en outre les étapes de :
g1. créer un fichier unifié contenant seulement les articles restants par un serveur de boutique en ligne (20) ; et
g2. transmettre le fichier unifié à un serveur d'impression à distance (30) via un réseau.

8. Système de gestion de travaux d'impression comprenant au moins un dispositif de traitement de données ayant une mémoire non-transitoire, qui stocke un programme logiciel d'ordinateur, et un processeur, qui exécute le programme logiciel d'ordinateur, dans lequel le programme logiciel d'ordinateur comprend un code de programme, le code de programme et l'au moins un dispositif de traitement de données étant configurés de sorte que le code de programme provoque que l'au moins un dispositif de traitement de données effectue les étapes de :
a recevoir une commande de travail d'impression pour imprimer une multitude d'articles ;
b traiter la multitude d'articles et créer une identification (ID) pour chaque article, laquelle est générée à partir du contenu entier de l'article et peut ainsi identifier et distinguer l'article selon son contenu ;
c déterminer si une identification d'article stockée dans une base de données correspond à quelqu'une des nouvelles identifications de la multitude d'articles (S130) ;
c si une identification d'article correspondante n'existe pas,
c1. garder l'article (S132) ;
c2. stocker l'identification de l'article gardé dans la base de données (S134) ;
d si une identification d'article correspondante existe,
d1. retirer l'article du travail d'impression (S136) ;
d2. répéter les étapes (b) à (d1) jusqu'à ce que tous de la multitude d'articles soient traités conformément ; et
e imprimer le travail avec seulement les articles restants.

9. Système selon la revendication 8, dans lequel le code de programme et l'au moins un dispositif de traitement de données sont configurés de sorte que le code de programme provoque l'exécution des étapes de :
f1. traiter tous les articles achetés précédemment par un client (S110) pour créer une identification pour chacun des articles ;
f2. stocker les identifications dans une base de données (S114) comme une partie de l'histoire d'achat du client ; et
f3. répéter les étapes (f1) à (f2) jusqu'à ce que tous les achats préalables du client soient traités.

10. Système selon la revendication 9, dans lequel dans l'étape (f1) l'identification d'article est créée à l'aide d'une fonction de hachage.

11. Système selon la revendication 10, dans lequel le contenu entier de chaque article est haché, quand l'identification de celui-ci est créée (S112).

12. Système selon l'une quelconque des revendications 8 à 11, dans lequel dans l'étape (b) l'identification d'article est créée à l'aide d'une fonction de hachage.

13. Système selon la revendication 12, dans lequel le contenu entier de chaque article est haché, quand l'identification de celui-ci est créée (S112).

14. Système selon l'une quelconque des revendications 8 à 13, dans lequel le code de programme et l'au moins un dispositif de traitement de données sont configurés de sorte que le code de programme provoque l'exécution des étapes de :
g1. créer un fichier unifié contenant seulement les articles restants par un serveur de boutique en ligne (20) ; et
g2. transmettre le fichier unifié à un serveur d'impression à distance (30) via un réseau.

15. Programme d'ordinateur pour commander au moins un dispositif de traitement de données, le programme d'ordinateur étant configuré pour provoquer que l'au moins un dispositif de traitement de données exécute un procédé de gestion de travaux d'impression comprenant les étapes de :
a recevoir une commande de travail d'impression pour imprimer une multitude d'articles ;
b traiter la multitude d'articles et créer une identification (ID) pour chaque article, laquelle est générée à partir du contenu entier de l'article et peut ainsi identifier et distinguer l'article selon son contenu ;
c déterminer si une identification d'article stockée dans une base de données correspond à quelqu'une des nouvelles identifications de la multitude d'articles (S130) ;
c si une identification d'article correspondante n'existe pas,
c1. garder l'article (S132) ;
c2. stocker l'identification de l'article gardé dans la base de données (S134) ;
d si une identification d'article correspondante existe,
d1. retirer l'article du travail d'impression (S136) ;
d2. répéter les étapes (b) à (d1) jusqu'à ce que tous de la multitude d'articles soient traités conformément ; et
e imprimer le travail avec seulement les articles restants.

16. Programme d'ordinateur selon la revendication 15, dans lequel le procédé comprend en outre les étapes de :
f1. traiter tous les articles achetés précédemment par un client pour créer une identification pour chacun des articles ;
f2. stocker les identifications dans une base de données (S114) comme une partie de l'histoire d'achat du client ; et
f3. répéter les étapes (f1) à (f2) jusqu'à ce que tous les achats préalables du client soient traités.

17. Programme d'ordinateur selon la revendication 16, dans lequel dans l'étape (f1) l'identification d'article est créée à l'aide d'une fonction de hachage.

18. Programme d'ordinateur selon la revendication 17, dans lequel le contenu entier de chaque article est haché, quand l'identification de celui-ci est créée (S112).

19. Programme d'ordinateur selon l'une quelconque des revendications 15 à 18, dans lequel dans l'étape (b) l'identification d'article est créée à l'aide d'une fonction de hachage.

20. Programme d'ordinateur selon la revendication 19, dans lequel le contenu entier de chaque article est haché, quand l'identification de celui-ci est créée (S112).

21. Programme d'ordinateur selon l'une quelconque des revendications 15 à 20, dans lequel le procédé comprend en outre les étapes de :
g1. créer un fichier unifié contenant seulement les articles restants par un serveur de boutique en ligne (20) ; et
g2. transmettre le fichier unifié à un serveur d'impression à distance (30) via un réseau.
